# EUROPEAN PATENT APPLICATION

(11) **EP 4 484 049 A1**
(43) Date of publication of application: **01.01.2025**
(21) Application number: 22928939.2
(22) Date of filing: 16.12.2022
(51) Int. Cl.: B23K 26/03, B23K 26/082

(54) **LASER PROCESSING DEVICE**

(30) Priority: 25.02.2022 JP 2022027701
(71) Applicant: Panasonic Intellectual Property Management Co., Ltd., Kadoma-shi, Osaka 571-0057 (JP)
(72) Inventor: MATSUMOTO, Akihisa, Kadoma-shi, Osaka 571-8506 (JP); SHIMAZAKI, Daichi, Kadoma-shi, Osaka 571-8506 (JP)
(74) Representative: Murgitroyd & Company
(86) International application number: PCT/JP2022/046395
(87) International publication number: WO 2023/162422

(57) **Abstract**

This laser processing device includes an imaging portion (48) accommodated in a housing (13a) of a head unit (13) that accommodates a scanning portion (46). The imaging portion (48) acquires a target object image including at least a portion of a machining region, by imaging a machining target (W) through protective glass (49). The imaging portion (48) is disposed in such a way that an imaging axis (48L) for acquiring the target object image intersects a vertical axis (49L) of the protective glass (49) in a position a prescribed first distance from the protective glass (49).

## Description

### TECHNICAL FIELD

The present disclosure relates to a laser processing device.

### BACKGROUND ART

A laser processing device includes a laser beam source that emits a laser beam onto a subject and an image-capturing unit (camera) that captures an image of the subject. Patent Literature 1 discloses a laser processing device that includes an image-capturing unit arranged in a housing and oriented so that its image-capturing optical axis is orthogonal to a processing reference plane.

### CITATION LIST

### Patent Literature

Patent Literature 1: Japanese Laid-Open Patent Publication No. 2021-010945

### SUMMARY OF INVENTION

### Technical Problem

It is desirable that an image-capturing unit arranged in a housing, as described above, have a wide angle of view. It is also desirable that the usability of the image-capturing functionality be improved.

It is an objective of the present disclosure to provide a laser processing device that obtains a wide angle of view with a simple structure and allows the usability of the image-capturing functionality to be improved.

### Solution to Problem

One aspect of the present disclosure is a laser processing device that processes a processing subject with a laser beam. The laser processing device includes a laser beam source that emits the laser beam, a scanner that directs the laser beam, emitted from the laser beam source, toward the processing subject and performs two-dimensional scanning within a processing region of the processing subject, an emission window that transmits the laser beam directed toward the processing subject by the scanner, and a housing that accommodates at least the scanner and includes one side surface oriented toward the processing subject. The one side surface includes the emission window. An image-capturing unit is accommodated in the housing. The image-capturing unit captures an image of the processing subject through the emission window to acquire a subject image including at least part of the processing region. The image-capturing unit is arranged so that an image-capturing axis for acquiring the subject image intersects a perpendicular axis of the emission window at a predetermined first distance from the emission window.

### Advantageous Effects of Invention

The laser processing device in accordance with one aspect of the present disclosure obtains a wide angle of view with a simple structure and allows the usability of the image-capturing functionality to be improved.

### BRIEF DESCRIPTION OF DRAWINGS

Fig. 1 is a perspective view showing a laser processing device in accordance with a first embodiment.
Fig. 2 is a block diagram illustrating the electrical configuration of the laser processing device shown in Fig. 1.
Fig. 3 is a schematic plan view illustrating the internal structure of a head unit shown in Fig. 1.
Fig. 4 is a schematic diagram illustrating, in part, the internal structure of a head unit shown in Fig. 1, as viewed from a lower side.
Fig. 5 is a perspective view showing a scanner and an image-capturing unit in the head unit of Fig. 1.
Fig. 6 is a diagram of the head unit of Fig. 1, as viewed from the front side, and illustrates the relationship of an optical axis of a laser beam and a guide beam with respect to an image-capturing axis of the image-capturing unit.
Fig. 7 is a diagram of the head unit of Fig. 1, as viewed from the front side, and illustrates the relationship of the optical axes of the laser beam and the guide beam with respect to a displacement sensor.
Fig. 8 is a diagram of the head unit of Fig. 1, as viewed from a lateral side, and illustrates the relationship of the optical axes of the laser beam and the guide beam with respect to the displacement sensor and the image-capturing unit.
Fig. 9 is a diagram illustrating the relationship of a lens position and a laser beam focal position in a focus adjustor.
Fig. 10 is a diagram illustrating the relationship of a lens position and a laser beam focal position in a focus adjustor.
Fig. 11 is a diagram illustrating the relationship of the lens position and the laser beam focal position in the focus adjustor.
Fig. 12 is a diagram illustrating a guide mark and a guide point formed by the guide beam.
Fig. 13 is a block diagram illustrating the electrical configuration of a laser processing device in accordance with a second embodiment.
Fig. 14 is a perspective view showing a modified example of the laser processing device.
Fig. 15 is a block diagram illustrating the electrical configuration of the laser processing device shown in Fig. 14.

### DESCRIPTION OF EMBODIMENTS

Several embodiments of a laser processing device in accordance with the present disclosure will now be described with reference to the accompanying drawings. Elements in the figures are illustrated for simplicity and clarity and have not necessarily been drawn to scale. To facilitate understanding, hatching lines may not be shown in the cross-sectional drawings. The accompanying drawings illustrate exemplary embodiments in accordance with the present disclosure and are not intended to limit the present disclosure. Terms such as "first", "second", and "third" in this disclosure are used to distinguish subjects and not used for ordinal purposes.

This detailed description includes exemplary embodiments of apparatuses, systems, and methods in accordance with the present disclosure. This detailed description is illustrative and is not intended to limit embodiments of the present disclosure or the application and use of the embodiments.

In this specification, the phrase "at least one of" as used in this disclosure means "one or more" of a desired choice. As one example, the phrase "at least one of" as used in this disclosure means "only one choice" or "both of two choices" in a case where the number of choices is two. In another example, the phrase "at least one of as used in this disclosure means "only one single choice" or "any combination of two or more choices" if the number of its choices is three or more.

### First Embodiment

### Outline of Laser Processing Device

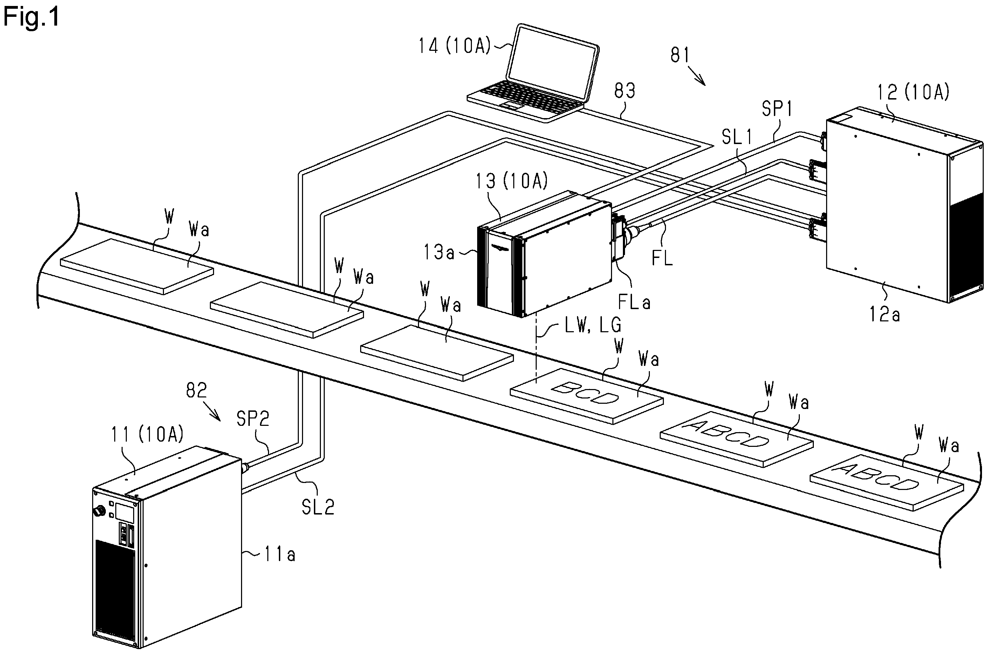

As shown in Fig. 1, a laser processing device 10A includes a control unit 11, a light source unit 12, a head unit 13, and a setting terminal 14. The light source unit 12 is connected by first electrical cables 81 and an optical fiber cable FL to the head unit 13. Further, the light source unit 12 is connected by second electrical cables 82 to the control unit 11. The first electrical cables 81 include a first power cable SP1 and a first signal cable SL1. The second electrical cables 82 include a second power cable SP2 and a second signal cable SL2. The control unit 11 is supplied with AC power by a power cable. The laser processing device 10A is operated by the supplied AC power and processes a processing subject W. The setting terminal 14 is connected by a third electrical cable 83 to the head unit 13.

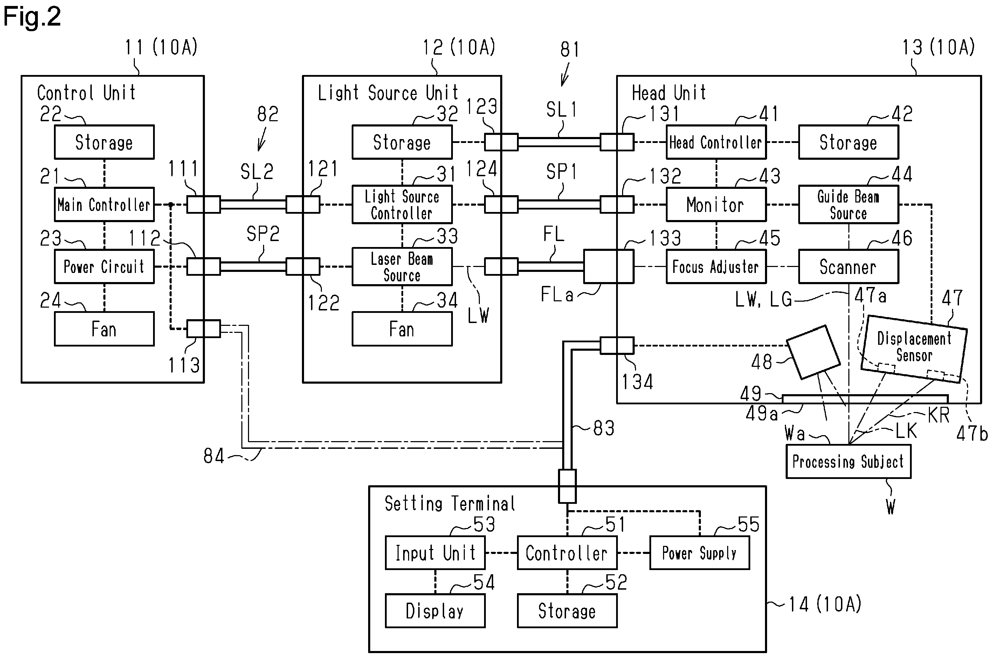

The setting terminal 14 is used to display various settings of the laser processing device 10A, the state of the laser processing device 10A, and various types of information. As shown in Figs. 1 and 2, the setting terminal 14 is connected by the third electrical cable 83 to the head unit 13. Further, as shown in Fig. 2, the setting terminal 14 is connected by a fourth electrical cable 84 to the control unit 11.

The control unit 11 controls the light source unit 12 and the head unit 13. The light source unit 12 generates a laser beam LWthat processes the processing subject W. The laser beam LW is transmitted by an optical fiber cable FL to the head unit 13. The head unit 13 emits the laser beam LW toward the processing subject W. In this manner, the laser processing device 10A emits the laser beam LW toward a processing surface Wa of the processing subject W to process the processing subject W.

### Light Source Unit

As shown in Fig. 1, the light source unit 12 includes a housing 12a. The housing 12a is substantially box-shaped.

As shown in Fig. 2, the light source unit 12 includes connectors 121 and 122. The connectors 121 and 122 are used to connect the light source unit 12 to the control unit 11. The connectors 121 and 122 are cable connectors for connection of the second electrical cables 82. The second electrical cables 82 include the second power cable SP2 and the second signal cable SL2. The second signal cable SL2 includes a cable and connectors at the two ends of the cable. The connector 121 is configured to allow for attachment and detachment of the second signal cable SL2. The second power cable SP2 includes a cable and connectors at the two ends of the cable. The connector 122 is configured to allow for attachment and detachment of the second power cable SP2.

The light source unit 12 includes connectors 123 and 124. The connectors 123 and 124 are used to connect the light source unit 12 to the control unit 11. The connectors 123 and 124 are cable connectors for connection of the first electrical cables 81. The first electrical cables 81 include the first power cable SP1 and the first signal cable SL1. The first signal cable SL1 includes a cable and connectors at the two ends of the cable. The connector 123 is configured to allow for attachment and detachment of the first signal cable SL1. The first power cable SP1 includes a cable and connectors at the two ends of the cable. The connector 124 is configured to allow for attachment and detachment of the first power cable SP1.

The light source unit 12 includes a light source controller 31, storage 32, a laser beam source 33, and a fan 34. The light source controller 31, the storage 32, the laser beam source 33, and the fan 34 are operated by drive power supplied through the second power cable SP2. The light source controller 31 is configured to communicate with a main controller 21 of the control unit 11 through the first signal cable SL1.

The light source controller 31 controls the laser beam source 33. The laser beam source 33 emits the laser beam LW. As long as the laser beam LW is emitted, the laser beam source 33 may be, for example, a fiber laser, a YAG laser, a CO2 laser, or the like.

The storage 32 stores information on the light source unit 12. The information on the light source unit 12 includes identification information of the light source unit 12. The identification information includes model information (model) and unique information (serial number) of the light source unit 12. The fan 34 is controlled by, for example, the light source controller 31. The fan 34 cools the laser beam source 33 and electronic components of the light source unit 12.

### Head Unit

As shown in Fig. 1, the head unit 13 includes a housing 13a. The housing 13a is substantially box-shaped.

As shown in Fig. 2, the head unit 13 includes connectors 131 and 132. The connectors 131 and 132 are used to connect the head unit 13 to the light source unit 12. The connectors 131 and 132 are cable connectors for connection of the first electrical cables 81. The first electrical cables 81 include the first power cable SP1 and the first signal cable SL1. The connector 131 is configured to allow for attachment and detachment of the first signal cable SL1. The connector 132 is configured to allow for attachment and detachment of the first power cable SP1.

The head unit 13 includes a connector 133. The connector 133 is a fiber cable connector for connection of the optical fiber cable FL. The optical fiber cable FL includes a head connector FLa. The connector 133 is configured to allow for attachment and detachment of the head connector FLa.

The head unit 13 includes a connector 134. The connector 134 is configured to allow for attachment and detachment of the third electrical cable 83. The setting terminal 14 is connected by the third electrical cable 83 to the head unit 13.

The head unit 13 includes a head controller 41, storage 42, a monitor 43, a guide beam source 44, a focus adjuster 45, a scanner 46, a displacement sensor 47, an image-capturing unit 48, and a protective glass 49.

The storage 42 stores information on the head unit 13. The information on the head unit 13 includes identification information of the head unit 13. The identification information includes model information (model) and unique information (serial number) of the head unit 13.

The monitor 43 monitors the intensity of the laser beam LW transmitted from the light source unit 12 through the optical fiber cable FL.

The guide beam source 44 emits a guide beam LG having a visible spectrum wavelength.

The focus adjuster 45 adjusts the focal position (focal length) of the laser beam LW.

The scanner 46 directs the laser beam LW toward the processing subject W. Further, the scanner 46 scans the laser beam LW over the processing surface Wa of the processing subject W. The laser beam LW, which is reflected by the scanner 46, is directed through the protective glass 49 and out of the head unit 13. The protective glass 49 may be formed by one or more sheets of glass. The protective glass 49 defines an emission window. The protective glass 49 includes an emission surface 49a that forms part of the outer surface of the head unit 13.

The displacement sensor 47 includes a light projector 47a and a light receiver 47b. The light projector 47a projects a detection beam LK having a visible spectrum wavelength. The detection beam LK is emitted through the protective glass 49 out of the head unit 13. The light projector 47a is arranged to project the detection beam LK toward the processing subject W. The light receiver 47b receives the detection beam LK (reflection light KR) reflected by the processing subject W. The displacement sensor 47 outputs the received light intensity. The displacement sensor 47 measures distance based on the state of the light received by the light receiver 47b. The distance is the distance from a reference plane of the head unit 13 to a subject that reflects the detection beam LK, namely, the processing subject W. The reference plane is defined by, for example, the emission surface 49a of the protective glass 49, the lower surface of the head unit 13, or the like.

The displacement sensor 47 is, for example, a sensor that measures the distance to a subject through a triangulation method. The light receiver 47b includes, for example, a light-receiving element that detects the position where the reflection light KR is received on a light-receiving surface. Such a light-receiving element is formed by, for example, a Complementary Metal-Oxide Semiconductor (CMOS) image sensor, a Charge Coupled Device (CCD) image sensor, a Position Sensitive Detector (PSD), or the like. The displacement sensor 47 is a single unit integrating the light projector 47a and the light receiver 47b.

The head controller 41 controls the guide beam source 44, the focus adjuster 45, the scanner 46, and the displacement sensor 47. The head controller 41 sends the monitoring result of the monitor 43 to the main controller 21 of the control unit 11. The head controller 41 sends the measurement result and the received light intensity obtained by the displacement sensor 47 to the main controller 21 of the control unit 11.

The image-capturing unit 48 is arranged to capture an image of the processing surface Wa of the processing subject W through the protective glass 49. The image-capturing unit 48 includes an imaging element and a lens that forms an image for the imaging element. The imaging element is formed by, for example, a CMOS image sensor, a CCD image sensor, or the like. The image-capturing unit 48 is arranged so that its lens is oriented toward the protective glass 49. The image-capturing unit 48 captures an image of the processing subject W through the protective glass 49 to acquire a subject image including at least part of a processing region of the processing subject W.

The image-capturing unit 48 is connected to the connector 134. The connector 134 is configured to allow for attachment and detachment of the third electrical cable 83. The third electrical cable 83 is an image-capturing cable including a power supplying line that supplies drive voltage to the image-capturing unit 48 and a signal line that outputs data of a subject image. The third electrical cable 83 is connected to the setting terminal 14. The setting terminal 14 is configured to supply the drive voltage of the image-capturing unit 48 to the connector to which the third electrical cable 83 is connected. Thus, the image-capturing unit 48 is actuated by the drive voltage supplied through the third electrical cable 83 and the connector 134. The actuated image-capturing unit 48 captures an image including at least part of the processing region of the processing subject W to generate data of the subject image. Then, the image-capturing unit 48 outputs the data of the acquired subject image to the connector 134. The data of the subject image is transmitted from the connector 134 by the third electrical cable 83 to the setting terminal 14. This allows the setting terminal 14 to acquire the data of the subject image from the image-capturing unit 48. Then, the setting terminal 14 shows the subject image, which is based on the acquired data, on a display 54. This allows a user, who is operating the setting terminal 14, to check the processing region of the processing subject W with the setting terminal 14.

### Control Unit

As shown in Fig. 1, the control unit 11 includes a housing 11a. The housing 11a is substantially box-shaped.

As shown in Fig. 2, the control unit 11 includes connectors 111 and 112. The connectors 111 and 112 are used to connect the light source unit 12 to the control unit 11. The connectors 111 and 112 are cable connectors for connection of the second electrical cables 82. The second electrical cables 82 include the second power cable SP2 and the second signal cable SL2. The connector 111 is configured to allow for attachment and detachment of the second signal cable SL2. The connector 112 is configured to allow for attachment and detachment of the second power cable SP2.

The control unit 11 includes a connector 113. The connector 113 is used to connect the setting terminal 14 to the control unit 11. The connector 113 is a cable connector for connection of the fourth electrical cable 84. The connector 113 is configured to allow for attachment and detachment of the fourth electrical cable 84.

The control unit 11 includes the main controller 21, storage 22, a power circuit 23, and a fan 24. The power circuit 23 supplies electric power for driving the control unit 11, the light source unit 12, and the head unit 13.

The storage 22 stores various types of information. The storage 22 stores, for example, identification information of the units (light source unit 12, head unit 13) that are connected to the control unit 11. The storage 22 stores processing data used to process the processing subject W. The processing data is, for example, information on a processing pattern such as a character or a figure that is to be engraved on the processing surface Wa of the processing subject W. The storage 22 stores reference mark data. The reference mark data is information on a position adjustment reference mark projected onto the processing surface Wa of the processing subject W. The reference mark is used to adjust the distance between the processing subject W and the head unit 13 (also referred to as "work distance," "working distance," "interwork distance," or the like).

The storage 22 stores information on the processing subject W. The information on the processing subject W is information related to the type of the processing subject W and includes material, color, surface state, reflection state (specular reflection, diffuse reflection, reflection amount), and/or the like. The storage 22 stores various types of distance information. The various types of distance information include work distance (working distance, interwork distance), focal position, reference distance, and/or the like.

Further, the storage 22 stores measurement results obtained by the displacement sensor 47. The storage 22 stores a first set value and a second set value for the received light intensity of the displacement sensor 47. The first set value and the second set value are respectively set as the lower limit value and the upper limit value of the light intensity range suitable for distance measurement with the displacement sensor 47. When the received light intensity is less than the first set value or when the received light intensity is greater than the second set value, an error may be included in the incidence position of the reflection light KR, or the measurement result, obtained by the light receiver 47b of the displacement sensor 47. Thus, the measurement result of the displacement sensor 47 is valid when the received light intensity of the displacement sensor 47 is greater than or equal to the first set value and less than or equal to the second set value or less. This allows position adjustment to be performed with higher accuracy.

The main controller 21 is configured to communicate with the light source controller 31 of the light source unit 12 and the head controller 41 of the head unit 13 through the first signal cable SL1 and the second signal cable SL2. The main controller 21 sends control data, which is based on processing data or the like, to the light source controller 31 and the head controller 41. For example, based on the processing data, the main controller 21 generates control data including on-off data and scanning position data (coordinate data) in correspondence with processing positions on the processing subject W. The main controller 21 sends the control data to the light source controller 31 and the head controller 41.

The light source controller 31 controls the laser beam source 33 based on the control data. For example, the light source controller 31 controls the intensity (power) of the laser beam LW emitted from the laser beam source 33.

The head controller 41 controls the scanner 46 based on the control data to process the processing subject W with the laser beam LW. The head controller 41 controls the guide beam source 44 based on the control data to emit the guide beam LG from the guide beam source 44. Further, the head controller 41 controls the scanner 46 to project a processing pattern and a reference mark with the guide beam LG onto the processing subject W. The processing pattern is shaped with characters, symbols, or figures formed on the processing subject W. The reference mark is a figure used to adjust the distance between the head unit 13 and the processing subject W.

### Setting Terminal

The setting terminal 14 includes a controller 51, storage 52, an input unit 53, the display 54, and a power supply 55. The display 54 is configured to show various types of information on the laser processing device 10A. The input unit 53 is configured to allow a user to input data. The setting terminal 14 includes, for example, a general-purpose terminal, such as a laptop computer, a Personal Digital Assistant (PDA), or a table terminal, and dedicated software uploaded to the general-purpose terminal.

The setting terminal 14 is connected by the third electrical cable 83 to the head unit 13. The setting terminal 14 is configured to supply drive voltage to the image-capturing unit 48, which is incorporated in the head unit 13, through the third electrical cable 83. The image-capturing unit 48 is actuated by the supplied drive voltage. This allows the image-capturing unit 48 to be actuated regardless of the operational state (on/off) of the head unit 13. The image-capturing unit 48 outputs data of the captured subject image when actuated. This allows the setting terminal 14 to acquire the data of the subject image regardless of the operational state of the head unit 13, or the operational state of the control unit 11. This improves the usability of the image-capturing unit 48.

The setting terminal 14 is connected by the fourth electrical cable 84 to the control unit 11. The fourth electrical cable 84 includes a signal line that transmits signals. The fourth electrical cable 84 may include a power line that transmits electric power.

The controller 51 executes application software. The controller 51 stores various data, resulting from the execution of the application software, in the storage 52. The various types of data include the processing data. The controller 51 shows various windows on the display 54 for generating and changing processing data. The controller 51 generates processing data for processing the processing subject W based on operation of the input unit 53 by the user. Then, the controller 51 stores the processing data in the storage 52. Further, the controller 51 sends the processing data to the control unit 11 through the fourth electrical cable 84.

The setting terminal 14, which is connected to the control unit 11, instructs the control unit 11 to execute various controls and operation modes based on the operation of the input unit 53. The instructed controls include, for example, processing initiation and processing termination. The operation modes include a processing mode, a teach mode, and a position adjustment mode. The processing mode is a mode for forming a processing pattern on the processing subject W with the laser beam LW. The teach mode is a mode for projecting a processing pattern onto the processing subject W with the guide beam LG. The position adjustment mode is a mode for adjusting the position of the processing subject W. The position of the processing subject W is the position of the processing subject W with respect to the laser processing device 10A (head unit 13), that is, the position of the laser processing device 10A (head unit 13) relative to the processing subject W. The position adjustment mode includes a first adjustment mode and a second adjustment mode. The first adjustment mode is a mode for adjusting the position of the processing subject W with the guide beam LG and the detection beam LK. The second adjustment mode is a mode for adjusting the position of the processing subject W with the measurement result of the displacement sensor 47. The setting terminal 14 displays characters or the like for selecting such operation modes. Further, the setting terminal 14 instructs the main controller 21 of the control unit 11 to perform the operation mode selected with the input unit 53. The setting terminal 14 has the functionalities of a mode selection unit, which selects the operation mode, and a processing subject setting unit.

The setting terminal 14 communicates with the main controller 21 of the control unit 11. The communication allows the setting terminal 14 to acquire the various types of information stored in the storage 22 from the main controller 21. The information includes, for example, the monitoring result of the monitor 43 of the head unit 13, the measurement result of the displacement sensor 47, and the like. The setting terminal 14 shows, on the display 54, the instructions for the control unit 11 and the various types of information acquired from the storage 22 of the control unit 11.

As described above, the setting terminal 14 is connected by the third electrical cable 83 to the head unit 13. The setting terminal 14 acquires the data of the subject image from the image-capturing unit 48, which is incorporated in the head unit 13, through the third electrical cable 83. The setting terminal 14 has the functionality for showing, on the display 54, the processing pattern of the processing data superimposed on the subject image. By showing the processing pattern superimposed on the subject image, the state of the processing pattern on the processing subject W can be checked easily. As described above, the image-capturing unit 48 can be actuated regardless of the operational state (on/off) of the head unit 13. Thus, settings or the set state can be checked using the actual processing image even when the laser processing device 10A (units 11 to 13) is not operating.

### Structure of Head Unit

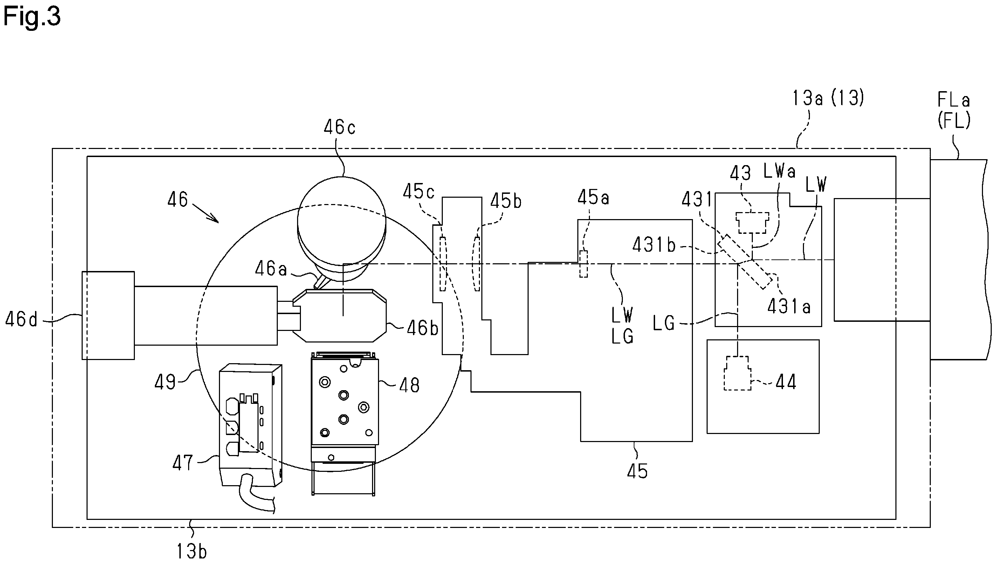

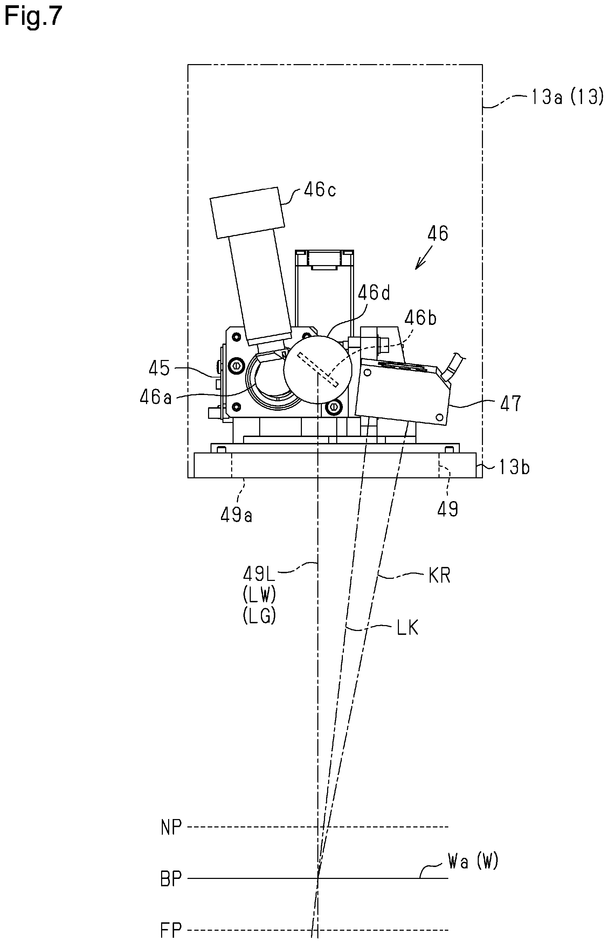

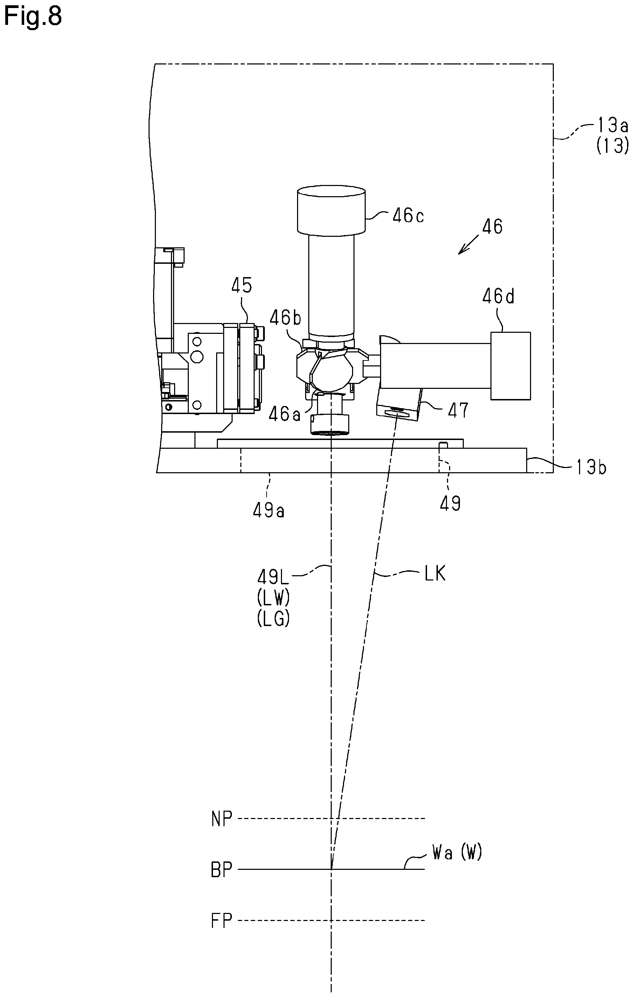

Figs. 3 to 8 schematically show optical elements included in the head unit 13. In Figs. 3 to 8, the double-dashed lines show the contour of the head unit 13. In Figs. 3 to 8, the single-dashed lines show optical axes of the laser beam LW and the like. In Figs. 7 and 8, the solid lines and broken lines show the processing surface Wa of the processing subject W.

As shown in Fig. 3, the head connector FLa of the optical fiber cable FL is attached to the head unit 13. The laser beam LW transmitted through the optical fiber cable FL is emitted from the head connector FLa into the head unit 13. The laser beam LW is transmitted through a light combining member 431. The light combining member 431 is, for example, a dichroic mirror. The light combining member 431 is arranged on the optical axis of the laser beam LW and is inclined at a predetermined angle with respect to the optical axis. The light combining member 431 includes an incidence surface 431a that reflects part of the laser beam LW.

A laser beam LWa, which is the part of the beam reflected by the light combining member 431, strikes the monitor 43. The monitor 43 includes a light-receiving element that receives the laser beam LWa. The monitor 43 detects the intensity of the received laser beam LWa. This allows the intensity of the laser beam LW to be monitored.

The focus adjuster 45 and the scanner 46 are arranged in a stage subsequent to the light combining member 431.

The focus adjuster 45 includes three lenses 45a, 45b, and 45c. The lenses 45a to 45c are arranged on the optical axis of the laser beam LW. The lens 45a is, for example, a concave lens, and the lenses 45b and 45c are, for example, convex lenses. The focus adjuster 45 includes a support, which supports the lens 45a, and a driver, which moves the support along the optical axis of the laser beam LW. The support is formed by, for example, a linear slider or the like. The driver is, for example, a stepping motor or the like. The laser beam LW passing through the focus adjuster 45 is focused at a distance determined by where the lenses 45a to 45c are located. This allows for adjustment of the focal length (focal position) of the laser beam LW.

The scanner 46 includes two mirrors 46a and 46b and the drivers 46c and 46d, which respectively drive the mirrors 46a and 46b. The drivers 46c and 46d are formed by, for example, stepping motors or the like. The mirrors 46a and 46b each reflect the laser beam LW. The drivers 46c and 46d pivot the mirrors 46a and 46b. The mirrors 46a and 46b are pivoted so that the laser beam LW reflected by the mirrors 46a and 46b is scanned in two orthogonal directions with respect to the processing subject W.

The guide beam source 44 is arranged to emit the guide beam LG toward an emission surface 431b of the light combining member 431. The emission surface 431b of the light combining member 431 reflects the guide beam LG. The guide beam LG is reflected by the light combining member 431 so as to be coaxial with the laser beam LW transmitted through the light combining member 431. That is, the light combining member 431 coaxially combines the laser beam LW and the guide beam LG. The guide beam LG reflected by the light combining member 431 passes through the focus adjuster 45 and is reflected in the scanner 46 in the same manner as the laser beam LW to be directed toward the processing subject W. Thus, the main controller 21 controls the scanner 46 based on the processing data in the same manner as when scanning the laser beam LW. As a result, the main controller 21 projects the processing pattern onto the processing surface Wa of the processing subject W with the guide beam LG. The guide beam LG has a visible spectrum wavelength. Thus, the guide beam LG allows one to check the processing pattern.

Further, the main controller 21 controls the scanner 46 based on the reference mark data. As a result, the main controller 21 projects the reference mark onto the processing surface Wa of the processing subject W with the guide beam LG.

### Displacement Sensor

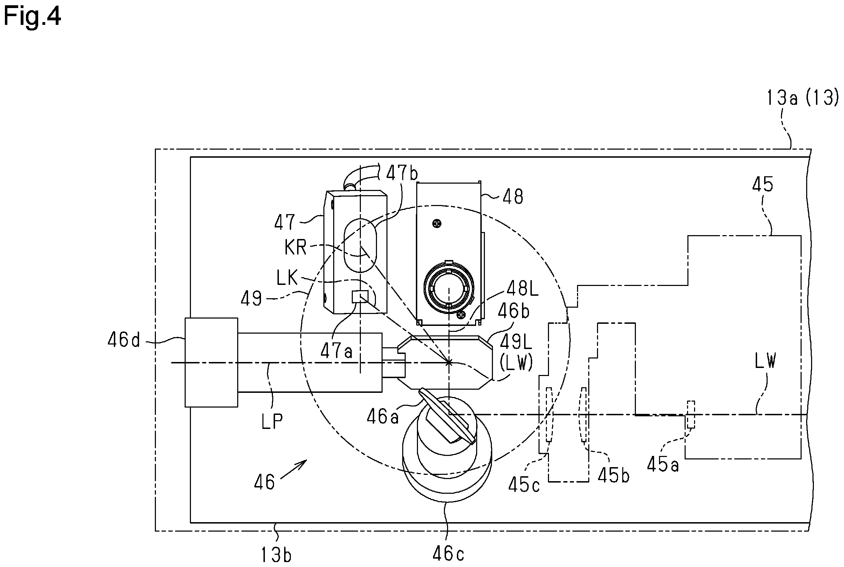

As shown in Figs. 4, 7, and 8, the displacement sensor 47 projects the detection beam LK from the light projector 47a. The detection beam LK is inclined relative to the perpendicular axis 49L of the protective glass 49. The displacement sensor 47 is arranged so that the optical axis of the detection beam LK, which is projected from the light projector 47a, is inclined relative to the perpendicular axis 49L of the protective glass 49. The perpendicular axis 49L of the protective glass 49 is equivalent to the optical axis of the laser beam LW reflected by the scanner 46 and emitted orthogonally from the emission surface 49a of the protective glass 49.

The optical axis of the detection beam LK intersects the perpendicular axis 49L of the protective glass 49 at a position located a predetermined second distance from the protective glass 49 (emission window). The displacement sensor 47 is arranged so that the optical axis of the detection beam LK intersects the perpendicular axis 49L of the protective glass 49 at a position located at the predetermined second distance from the protective glass 49. The second distance from the protective glass 49 to the position where the optical axis of the detection beam LK and the perpendicular axis 49L intersect is, for example, the distance from the emission surface 49a of the protective glass 49 to the point where the optical axis of the detection beam LK and the perpendicular axis 49L intersect. The second distance is referred to as a reference distance.

As shown in Fig. 4, when viewing the head unit 13 from the side of the emission surface 49a of the protective glass 49, the displacement sensor 47 is located toward the distal side (left side in Fig. 4) of the head unit 13 from the perpendicular axis 49L of the protective glass 49. Further, the displacement sensor 47 is arranged so that the light projector 47a and the light receiver 47b are located at one side (upper side in Fig. 4) of a plane LP (indicated by single-dashed line) that includes the perpendicular axis 49L of the protective glass 49 and is parallel to the optical axis of the laser beam LW that strikes the scanner 46. Thus, the optical axis of the detection beam LK projected from the displacement sensor 47 is inclined with respect to two axes in which the laser beam LW is scanned by the scanner 46. The light projector 47a and the light receiver 47b are arranged so that in the plane including the perpendicular axis 49L of the protective glass 49, the plane orthogonal to the laser beam LW emitted from the focus adjuster 45 intersects a plane including the detection beam LK and the reflection light KR at a predetermined angle. In Fig. 4, the mirror 46a scans the laser beam LW in the lateral direction in Fig. 4. This scanning axis is referred to as the X-axis. In the same manner, the mirror 46b scans the laser beam LW in the vertical direction in Fig. 4. This scanning axis is referred to as the Y-axis. The perpendicular axis 49L is, for example, the intersecting point of the X-axis and the Y-axis, that is, the origin (center) of the X-Y coordinates in which the laser beam LW is scanned. The perpendicular axis 49L corresponds to the center of the processing region.

### Image-Capturing Unit

As shown in Figs. 3 and 4, the image-capturing unit 48 is located at the side of the mirror 46b of the scanner 46 opposite the mirror 46a.

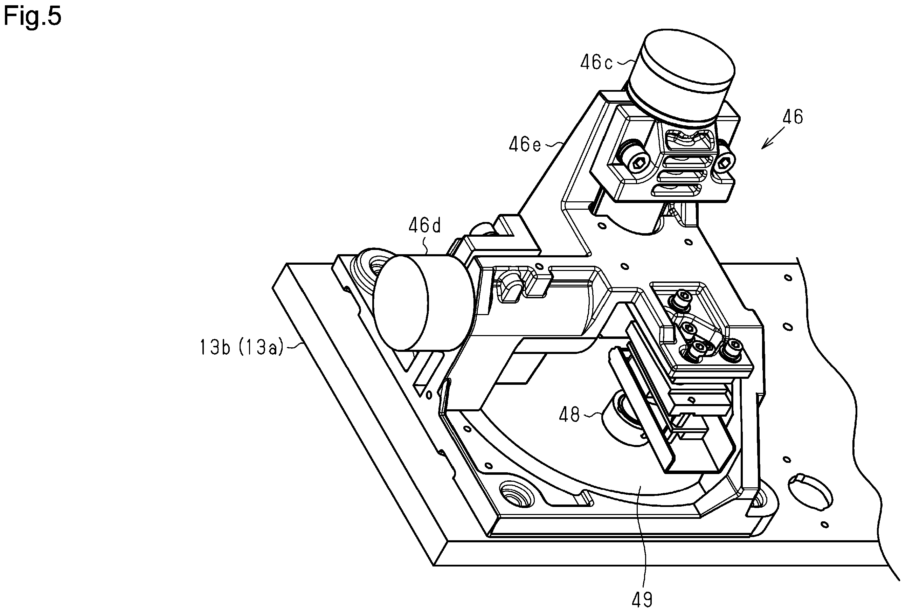

As shown in Fig. 5, the image-capturing unit 48 is fixed to a support 46e of the scanner 46. The housing 13a of the head unit 13 includes a base plate 13b. The base plate 13b includes a lower surface defining one side surface of the housing 13a where the protective glass 49 is arranged. The protective glass 49 is fixed to the base plate 13b.

The support 46e is fixed to an upper surface of the base plate 13b. The drivers 46c and 46d of the scanner 46 are fixed to the support 46e. Further, the image-capturing unit 48 is fixed to the support 46e. Although not shown in Fig. 5, the displacement sensor 47 shown in Fig. 7 and other drawings are fixed to the support 46e.

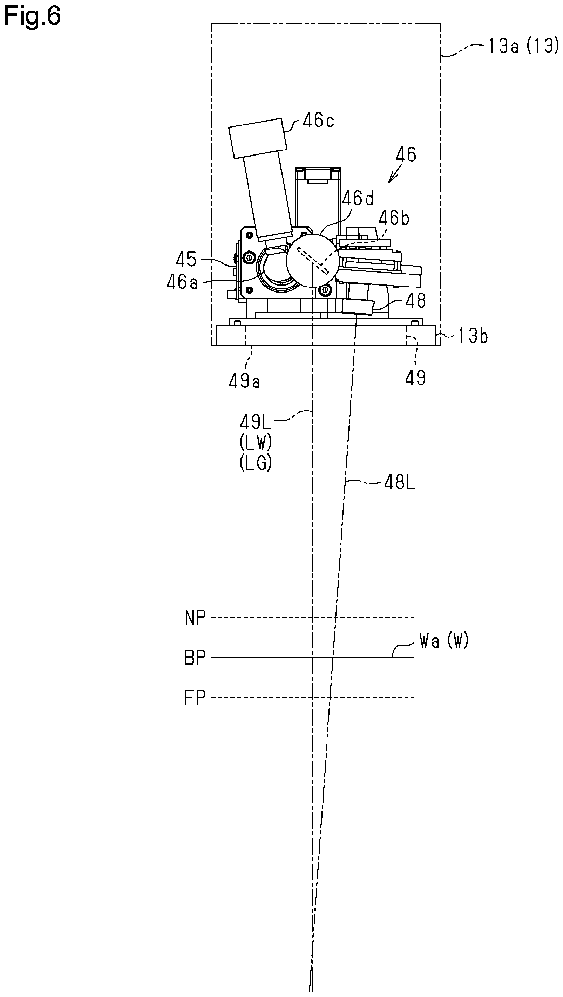

As shown in Figs. 4 and 6, the image-capturing unit 48 is arranged so that an image-capturing axis 48L is inclined relative to the perpendicular axis 49L of the protective glass 49. The image-capturing axis 48L is an optical axis extending through the center of the lens of the image-capturing unit 48. The optical axis is orthogonal to a light incidence surface of an image-capturing element that captures a subject image.

The image-capturing axis 48L of the image-capturing unit 48 intersects the perpendicular axis 49L of the protective glass 49 at a predetermined first distance from the protective glass 49 (emission window). The image-capturing unit 48 is arranged so that the image-capturing axis 48L intersects the perpendicular axis 49L of the protective glass 49 at a position located at the first distance from the protective glass 49. Further, the image-capturing unit 48 is arranged so that the image-capturing axis 48L is inclined relative to the perpendicular axis 49L of the protective glass 49.

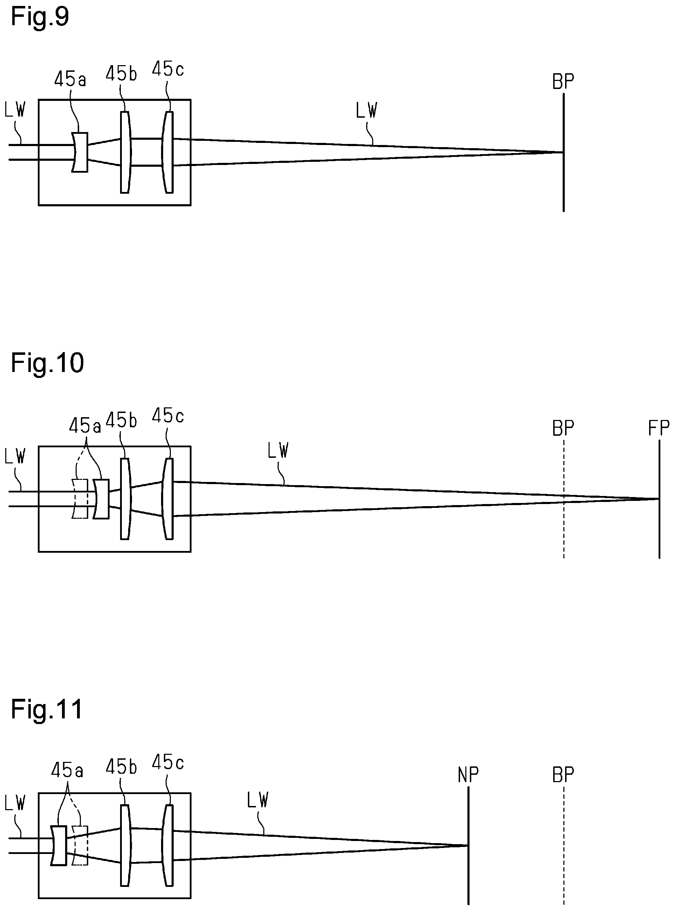

The first distance from the protective glass 49 (emission window) to where the image-capturing axis 48L and the perpendicular axis 49L intersect is, for example, the distance from the emission surface 49a of the protective glass 49 to the point where the image-capturing axis 48L and the perpendicular axis 49L intersect. The image-capturing unit 48 is arranged so that the first distance is greater than the maximum focal length to the farthest focal plane FP in the focal position adjustment range of the focus adjuster 45 shown in Figs. 6 and 10. The first distance is the distance from the protective glass 49 to a position that is located beyond the focal position adjustment range of the focus adjuster 45 and far from the protective glass 49. The first distance is set in such a manner to allow the image-capturing axis 48L of the image-capturing unit 48 to be close to the perpendicular axis 49L of the protective glass 49.

### Adjustment of Focal Length

As shown in Fig. 9, the focus adjuster 45 includes the lenses 45a, 45b, and 45c. The lens 45a is a concave lens, and the lenses 45b and 45c are convex lenses. The lens 45a and the lens 45b enlarge the diameter of the incident laser beam LW and output the laser beam LW, which is collimated light. The lens 45c focuses the laser beam LW, which is collimated light.

As shown in Fig. 10, when the lens 45a is moved toward the lens 45b, the laser beam LW transmitted through the lens 45b is enlarged, that is, the beam diameter is increased gradually. This laser beam LW results in the focal position where the lens 45c focuses the laser beam LW being farther from the lens 45c than the focal position shown in Fig. 9. That is, the focal length of the laser beam LW is increased.

As shown in Fig. 11, when the lens 45a is moved away from the lens 45b, the laser beam LW transmitted through the lens 45b is narrowed, that is, the beam diameter is decreased gradually. This laser beam LW results in the focal position where the lens 45c focuses the laser beam LW being closer to the lens 45c than the focal position shown in Fig. 9. That is, the focal length of the laser beam LW is decreased.

The head controller 41 shown in Fig. 2 controls the position of the lens 45a of the focus adjuster 45. The lens 45a is moved to change the inter-lens distance between the lenses 45a and 45b. The head controller 41 controls the focus adjuster 45 to adjust the inter-lens distance.

Fig. 9 shows a state in which the lens 45a is located at a reference position. The reference position is a position located at the middle of a movement range in which the lens 45a is moved. A plane that includes the focal position of the laser beam LW in this state and is orthogonal to the optical axis is referred to as a reference plane BP. The distance from the head unit 13 (emission surface 49a of protective glass 49) to the reference plane BP is referred to as the reference focal length. A plane orthogonal to the optical axis is defined by the X-axis (X-coordinate values) and the Y-axis (Y-coordinate values), namely, two-dimensional coordinate values. A direction extending along the optical axis is defined by the Z-axis (Z-coordinate values), namely, one-dimensional coordinate values.

Figs. 10 and 11 show the adjustment range in which the lens 45a is moved.

Fig. 10 shows the lens 45a moved in its movement range from the reference position where the lens 45a is located in Fig. 9 to a position closest to the lens 45b. The focal position of the laser beam LW in this state is the farthest position in the Z-axis direction. A plane that includes the farthest position and is orthogonal to the optical axis is referred to as the farthest focal plane FP. In strict terms, each diagonal point of a square processing region (engraving area) on a two-dimensional plane will be the farthest position on the processing surface Wa including the processing region. Nevertheless, in this case, the farthest position is the origin position on the two-dimensional plane in the optical axis direction (Z-axis direction). The distance from the head unit 13 (emission surface 49a of protective glass 49) to the farthest focal plane FP is referred to as the maximum focal length.

Fig. 11 shows the lens 45a moved in its movement range from the reference position where the lens 45a is located in Fig. 9 to a position farthest from the lens 45b. The focal position of the laser beam LW in this state is the closest position in the Z-axis direction. A plane that includes the closest position and is orthogonal to the optical axis is referred to as the closest focal plane NP. The distance from the head unit 13 (emission surface 49a of protective glass 49) to the closest focal plane NP is referred to as the minimum focal length.

### Guide Mark and Guide Point

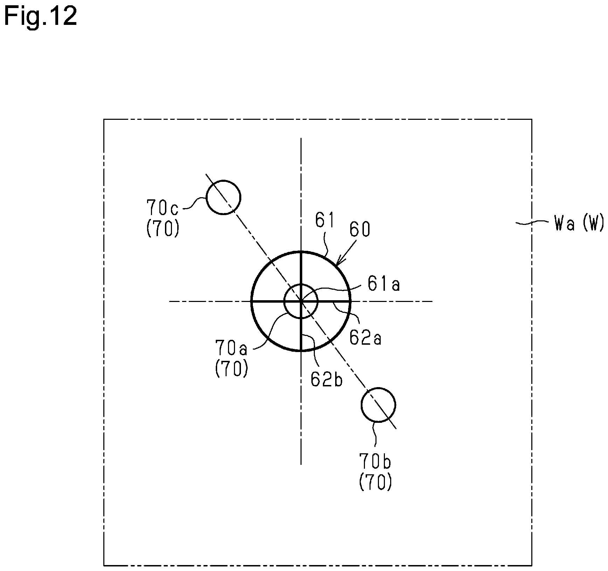

Fig. 12 shows one example of a reference mark 60. The reference mark 60 includes a circle 61, which has a predetermined radius, and two straight lines 62a and 62b, which orthogonally intersect each other at the center point 61a of the circle 61. The center point 61a of the circle 61 is set as the origin of the X-Y coordinates in which, for example, the scanner 46 shown in Figs. 3 to 8 scans the laser beam LW. The color of the reference mark 60, that is, the color of the guide beam LG, is, for example, green.

Fig. 12 shows a guide point 70. The guide point 70 is shown on the processing surface Wa of the processing subject W by the detection beam LK projected from the light projector 47a of the displacement sensor 47. In Fig. 12, the guide point 70 is shown as a circle. In the example shown in Fig. 12, the guide point 70 includes three guide points 70a, 70b, and 70c. The color of the guide points 70a to 70c, that is, the color of the detection beam LK, is, for example, red.

As shown in Figs. 4, 7, and 8, the detection beam LK intersects the perpendicular axis 49L at the second distance (reference distance) from the protective glass 49 (emission window). The predetermined reference distance to the intersecting position is set to, for example, the distance to the reference plane BP shown in Fig. 9. In this case, the detection beam LK intersects the perpendicular axis 49L at the reference plane BP. As shown in Fig. 12, the reference mark 60 including the circle 61, which is centered about the perpendicular axis 49L, is projected onto the reference plane BP. Thus, the guide point 70 formed by the detection beam LK is located at the center of the reference mark 60. That is, when the processing surface Wa of the processing subject W is located at the reference plane BP, the guide point 70a (70) is projected onto the center of the reference mark 60.

### Operation

The operation of the laser processing device 10A in accordance with a first embodiment will now be described.

The laser processing device 10A includes the image-capturing unit 48 accommodated in the housing 13a of the head unit 13, which accommodates the scanner 46. The image-capturing unit 48 captures an image of the processing subject W through the protective glass 49 and acquires a subject image including at least part of a processing region. The image-capturing unit 48 is arranged so that the image-capturing axis 48L, which is for acquiring a subject image, intersects the perpendicular axis 49L of the protective glass 49 at the first distance from the protective glass 49 (emission window).

The perpendicular axis 49L of the protective glass 49 is equivalent to the optical axis of the laser beam LW reflected by the scanner 46 and emitted orthogonally from the emission surface 49a of the protective glass 49. The optical axis of the laser beam LW corresponds to the center of the processing region in the processing surface Wa of the processing subject W.

As described above, the image-capturing unit 48 is arranged so that the image-capturing axis 48L of the image-capturing unit 48 is inclined relative to the perpendicular axis 49L of the protective glass 49. This allows the image-capturing unit 48 to be arranged in the vicinity of the protective glass 49. Further, the arrangement of the image-capturing unit 48 will not affect the arrangement of the scanner 46. The arrangement of the image-capturing unit 48 so that the image-capturing axis 48L is inclined relative to the perpendicular axis 49L of the protective glass 49 obtains a wide angle of view with a simple structure.

The first distance from the protective glass 49 to the position where the image-capturing axis 48L of the image-capturing unit 48 intersects the perpendicular axis 49L of the protective glass 49 is the distance from the protective glass 49 to a position that is located beyond the focal position adjustment range of the focus adjuster 45 and far from the protective glass 49. By setting the first distance in this manner, the image-capturing axis 48L of the image-capturing unit 48 can be located close to the perpendicular axis 49L of the protective glass 49. This acquires a subject image with reduced distortion.

The image-capturing unit 48 is connected to the connector 134 of the head unit 13. The image-capturing unit 48 is actuated by the drive voltage supplied from the connector 134 and outputs the data of the subject image to the connector 134. The image-capturing unit 48 is not connected to the connector 132, which is for supplying the drive voltage that drives the optical members in the head unit 13, and the connector 131, which is for transmitting control signals to the optical members. Thus, the image-capturing unit 48 is configured to be driven independently from the head unit 13. Further, the image-capturing unit 48 is actuated to acquire the data of the subject image regardless of the operational state of the head unit 13, that is, the operational state of the control unit 11. The setting terminal 14, which is connected to the connector 134c, obtains the data of the subject image regardless of the operation state of the head unit 13, that is, the operational state of the control unit 11. This improves the usability of the image-capturing unit 48.

The setting terminal 14 is connected by the third electrical cable 83 to the head unit 13. The setting terminal 14 acquires the data of the subject image from the image-capturing unit 48, which is incorporated in the head unit 13, through the third electrical cable 83. The setting terminal 14 has the functionality for showing, on the display 54, the processing pattern of the processing data superimposed on the subject image. By showing the processing pattern superimposed on the subject image, the state of the processing pattern on the processing subject W can be checked easily.

As described above, the image-capturing unit 48 acquires the subject image of the processing subject W with reduced distortion. Thus, the state of a processing pattern can be checked without performing distortion correction on the subject image.

The operation modes of the laser processing device 10A will now be described.

### Processing Mode

When the processing mode is selected with the setting terminal 14 and an instruction to start processing is given, the main controller 21 starts processing the processing subject W.

A main process is executed to emit the laser beam LW to the processing subject W based on the processing data. The main controller 21 generates control data. The control data includes on-off data of the laser beam LW and scanning position datasets (coordinate datasets), which correspond to processing positions on the processing subject W and which is based on processing data related to the characters or the like that are to be engraved. The main controller 21 sends the control data to the light source controller 31 of the light source unit 12 and the head controller 41 of the head unit 13.

The light source controller 31 of the light source unit 12 controls the laser beam source 33 based on the control data and has the laser beam source 33 output the laser beam LW. The head controller 41 of the head unit 13 controls the focus adjuster 45 and the scanner 46 based on the control data and scans the laser beam LW over the processing subject W. As a result, the laser processing device 10A processes the processing surface Wa of the processing subject W in accordance with the processing pattern.

### Teach Mode

When the teach mode is selected with the setting terminal 14 and an instruction to start teaching is given, the main controller 21 starts performing a teaching process on the processing subject W.

A main process is executed to emit the guide beam LG to the processing subject W based on the processing data. The main controller 21 generates control data. The control data includes on-off data of the guide beam LG and scanning position datasets (coordinate datasets), which correspond to processing positions on the processing subject W and which is based on processing data related to the characters or the like that are to be engraved. The main controller 21 sends the control data to the head controller 41 of the head unit 13.

Based on the control data, the head controller 41 of the head unit 13 controls the guide beam source 44, the focus adjuster 45, and the scanner 46 to scan the guide beam LG over the processing subject W. As a result, the laser processing device 10A projects the processing pattern onto the processing surface Wa of the processing subject W.

### Position Adjustment Mode: First Adjustment Mode

When a first adjustment mode is selected as the position adjustment mode with the setting terminal 14 and an instruction to start the first adjustment mode is given, the main controller 21 starts processing the processing subject W in the first adjustment mode.

A main processor executes a process for emitting the guide beam LG onto the processing subject W based on the reference mark data. The main controller 21 generates control data. The control data includes on-off data of the guide beam LG and scanning position datasets (coordinate datasets), which correspond to processing positions on the processing subject W and which is based on the reference mark data. Further, the control data includes an instruction to have the light projector 47a of the displacement sensor 47 emit the detection beam LK. The main controller 21 sends the control data to the head controller 41 of the head unit 13.

Based on the control data, the head controller 41 of the head unit 13 controls the guide beam source 44, the focus adjuster 45, and the scanner 46 to scan the guide beam LG over the processing subject W. As a result, the laser processing device 10A projects the reference mark 60 onto the processing surface Wa of the processing subject W. Further, the head controller 41 has the light projector 47a of the displacement sensor 47 project the detection beam LK based on the control data. As a result, the laser processing device 10A projects the guide point 70 onto the processing surface Wa of the processing subject W.

As shown in Figs. 4, 7, and 8, the detection beam LK is inclined relative to the perpendicular axis 49L of the protective glass 49. Thus, when the processing surface Wa is located closer to the head unit 13 or farther from the head unit 13 than the reference plane BP, the guide point 70 of the detection beam LK is shifted away from the center of the reference mark 60. For example, when the processing surface Wa is located at the farthest position shown in Fig. 10, the guide point 70b shown in Fig. 12 will be projected. Further, for example, when the processing surface Wa is located at the closest position shown in Fig. 11, the guide point 70c shown in Fig. 12 will be projected. The guide points 70a to 70c projected in this manner facilitates determination of whether the processing surface Wa is located at the reference plane BP.

### Position Adjustment Mode: Second Adjustment Mode

When a second adjustment mode is selected as the position adjustment mode with the setting terminal 14 and an instruction to start the second adjustment mode is given, the main controller 21 starts processing the processing subject W in the second adjustment mode.

The main controller 21 generates control data including an instruction for measuring distance with the displacement sensor 47. The main controller 21 sends the control data to the head controller 41 of the head unit 13. The head controller 41 measures distance with the displacement sensor 47 based on the control data. The head controller 41 sends data including the measurement result of the displacement sensor 47 and the received light intensity to the main controller 21. Based on the data received from the head controller 41, the main controller 21 shows the measurement result obtained by the displacement sensor 47 on the display 54 of the setting terminal 14.

The detection beam LK is projected from the light projector 47a of the displacement sensor 47 shown in Fig. 2. The displacement sensor 47 measures distance with the state of the light received by the light receiver 47b. The head controller 41 shown in Fig. 2 sends the measurement result of the displacement sensor 47 to the main controller 21. Based on the received measurement result, the main controller 21 shows the distance on the display 54 of the setting terminal 14. For example, the main controller 21 shows the measured distance, which is based on the measurement result, on the display 54 of the setting terminal 14. The measured distance is, for example, shown as the distance from the head unit 13 (emission surface 49a of protective glass 49) to the processing surface Wa of the processing subject W. The measured distance allows the position of the processing subject W to be adjusted with higher accuracy.

The main controller 21 shows a processing subject distance, which is stored in the storage 22, on the display 54. The processing subject distance is set when forming a processing pattern on the processing surface Wa of the processing subject W with a given beam diameter. The processing subject distance is set to, for example, the reference distance. One sets the processing subject distance in a variable manner by operating the setting terminal 14. The processing subject distance is stored in the storage 22. The focal position of the laser beam LW with respect to the processing surface Wa is shifted in the height direction (optical axis direction) to perform processing with a given beam diameter. For example, when processing the processing pattern in a state in which the laser beam LW is most narrowed (focal position), the focal length of the laser beam LW will be equal to the processing subject distance. The processing subject distance and the measured distance shown on the display 54 facilitates determination of whether the processing subject W has been positioned. The processing subject W is moved so that the measured distance matches the processing subject distance. This allows the processing subject Wto be positioned with further ease and accuracy.

In the second adjustment mode, the main controller 21 stops projecting the reference mark 60 with the guide beam LG. Thus, the guide beam LG reflected by the processing surface Wa of the processing subject W will not strike the light receiver 47b. For example, the main controller 21 sends control data to the head controller 41 to stop emission, and the head controller 41 stops the emission of the guide beam LG from the guide beam source 44. For example, a shutter may be arranged between the light combining member 431 and the focus adjuster 45, which are shown in Fig. 3, and the shutter may be used to block the guide beam LG.

The main controller 21 compares the received light intensity of the displacement sensor 47, which is included in the data received from the head controller 41f, with the first set value and the second set value, which are stored in the storage 22. The main controller 21 issues a measurement error depending on the comparison result. The main controller 21 indicates the measurement error on the display 54 of the setting terminal 14 when the received light intensity is less than the first set value. This allows one to check whether the received light intensity is insufficient at the displacement sensor 47. Further, the main controller 21 indicates a measurement error on the display 54 of the setting terminal 14 when the received light intensity is greater than the second set value. This allows one to check whether the received light intensity is excessive at the displacement sensor 47. Such error indication allows one to check whether the distance measured by the displacement sensor 47 is unstable.

The main controller 21 may use the information of the processing subject W stored in the storage 22 to disable the second adjustment mode so that processing in the second adjustment mode is not executed. For example, the main controller 21 enables the second adjustment mode when the reflection state of the processing subject W is set to diffuse reflection in accordance with the type of the processing subject W, and shows the measurement result of the displacement sensor 47 on the display 54 of the setting terminal 14. In contrast, the main controller 21 disables the second adjustment mode when the reflection state of the processing subject W is set to specular reflection in accordance with the type of the processing subject W.

As shown in Fig. 4, the light receiver 47b of the displacement sensor 47 and the light projector 47a of the displacement sensor 47 are located at the same side of a plane including the perpendicular axis 49L of the protective glass 49. Thus, when the processing subject W reflects the detection beam LK in a specular manner, the reflection light KR from the processing subject W may not strike the light projector 47a thereby hindering distance measurement. Thus, the main controller 21 disables the second adjustment mode. In this manner, the main controller 21 determines whether to enable or disable the second adjustment mode in accordance with the information (reflection state) of the processing subject W.

The main controller 21 may use other information to perform such a determination. For example, the main controller 21 may use the color of the processing subject W to perform such a determination. For example, when the color of the processing subject W is one, such as black, that decreases the intensity of the reflected detection beam LK, the main controller 21 disables the second adjustment mode. The main controller 21 may show a message on the display 54 indicating that the second adjustment mode is disabled.

### Advantages

As described above, the present embodiment has the following advantages.

(1-1) The laser processing device 10A includes the image-capturing unit 48 accommodated in the housing 13a of the head unit 13, which accommodates the scanner 46. The image-capturing unit 48 captures an image of the processing subject W through the protective glass 49 and acquires a subject image including at least part of a processing region. The image-capturing unit 48 is arranged so that the image-capturing axis 48L, which is for acquiring a subject image, intersects the perpendicular axis 49L of the protective glass 49 at the predetermined first distance from the protective glass 49 (emission window). The perpendicular axis 49L of the protective glass 49 is equivalent to the optical axis of the laser beam LW reflected by the scanner 46 and emitted orthogonally from the emission surface 49a of the protective glass 49. The optical axis of the laser beam LW corresponds to (extends through) the center of the processing region in the processing surface Wa of the processing subject W.

The image-capturing unit 48 is arranged so that the image-capturing axis 48L of the image-capturing unit 48 is inclined relative to the perpendicular axis 49L of the protective glass 49. This allows the image-capturing unit 48 to be arranged in the vicinity of the protective glass 49. Further, the arrangement of the image-capturing unit 48 will not affect the arrangement of the scanner 46. The arrangement of the image-capturing unit 48 so that the image-capturing axis 48L is inclined relative to the perpendicular axis 49L of the protective glass 49 obtains a wide angle of view with a simple structure.
(1-2) The image-capturing unit 48 is connected to the connector 134 of the head unit 13. The image-capturing unit 48 is actuated by the drive voltage supplied from the connector 134 and outputs the data of the subject image to the connector 134. The image-capturing unit 48 is not connected to the connector 132, which is for supplying the drive voltage that drives the optical members in the head unit 13, and the connector 131, which is for transmitting control signals to the optical members. Thus, the image-capturing unit 48 is configured to be driven independently from the head unit 13. Further, the image-capturing unit 48 is actuated to acquire the data of the subject image regardless of the operational state of the head unit 13, that is, the operational state of the control unit 11. The setting terminal 14, which is connected to the connector 134c, obtains the data of the subject image regardless of the operation state of the head unit 13, that is, the operational state of the control unit 11. This improves the usability of the image-capturing unit 48.
(1-3) The setting terminal 14 is connected by the third electrical cable 83 to the head unit 13. The setting terminal 14 acquires the data of the subject image from the image-capturing unit 48, which is incorporated in the head unit 13, through the third electrical cable 83. The setting terminal 14 has the functionality for showing, on the display 54, the processing pattern of the processing data superimposed on the subject image. By showing the processing pattern superimposed on the subject image, the state of the processing pattern on the processing subject W can be checked easily.
(1-4) The setting terminal 14 shows the subject image on the display 54. Thus, the display 54 shows the subject image in the teach mode, that is, the subject image in a state in which the processing pattern is emitted onto the processing subject W by the guide beam LG. By showing the subject image in such a manner, one can easily check the state of the processing pattern on the processing subject W.
(1-5) The setting terminal 14 shows the subject image on the display 54. The display 54 shows the subject image in the position adjustment mode (first adjustment mode), that is, the subject image in a state in which the reference mark 60, which is formed by the guide beam LG, and the guide point 70, which is formed by the detection beam LK of the displacement sensor 47, are emitted onto the processing subject W. By showing the subject image in such a manner, one can easily check whether the processing surface Wa is positioned at the reference plane BP.
(1-6) The laser processing device 10A includes the laser beam source 33, which emits the laser beam LW, the guide beam source 44, which emits the guide beam LG having a visible spectrum wavelength, and the scanner 46, which scans the laser beam LW and the guide beam LG. The laser processing device 10A includes the protective glass 49, which transmits the laser beam LW and the guide beam LG. Further, the laser processing device 10A includes the displacement sensor 47, which includes the light projector 47a and the light receiver 47b. The light projector 47a projects the detection beam LK having a visible spectrum wavelength onto the processing subject W. The displacement sensor 47 is arranged so that the detection beam LK intersects the perpendicular axis 49L of the protective glass 49 at the predetermined reference distance from the protective glass 49. The light receiver 47b receives the detection beam LK (reflection light KR) diffusively reflected by the processing subject W. The displacement sensor 47 measures distance based on the state of the light received by the light receiver 47b. Based on the measurement result of the displacement sensor 47, the main controller 21 shows the distance on the display 54 of the setting terminal 14.

For example, the main controller 21 shows the measured distance, which is based on the measurement result, on the display 54 of the setting terminal 14. The measured distance is, for example, shown as the distance from the head unit 13 (emission surface 49a of protective glass 49) to the processing surface Wa of the processing subject W. The measured distance allows the position of the processing subject W to be adjusted with higher accuracy.
(1-7) The main controller 21 shows the processing subject distance, which is stored in the storage 22, on the display 54. The processing subject distance is set when forming a processing pattern on the processing surface Wa of the processing subject W with a given beam diameter. The processing subject distance is set to, for example, the reference distance. One sets the processing subject distance in a variable manner by operating the setting terminal 14. The processing subject distance is stored in the storage 22. The focal position of the laser beam LW with respect to the processing surface Wa is shifted in the height direction (optical axis direction) to process the processing subject W with a given beam diameter.
(1-8) The main controller 21 compares the received light intensity of the displacement sensor 47, which is included in the data received from the head controller 41, with the first set value and the second set value, which are stored in the storage 22. The main controller 21 indicates an error on the display 54 of the setting terminal 14 when the received light intensity is less than the first set value. This allows one to check whether the received light intensity is insufficient at the displacement sensor 47. Further, the main controller 21 indicates an error on the display 54 of the setting terminal 14 when the received light intensity is greater than the second set value. This allows one to check whether the received light intensity is excessive at the displacement sensor 47. Such error indication allows one to check whether the distance measured by the displacement sensor 47 is unstable.
(1-9) The storage 22 stores measurement results obtained by the displacement sensor 47. Further, the storage 22 stores the first set value and the second set value for the received light intensity of the displacement sensor 47. The first set value and the second set value are respectively set as the lower limit value and the upper limit value of the light intensity range suitable for distance measurement with the displacement sensor 47. When the received light intensity is less than the first set value or when the received light intensity is greater than the second set value, an error may be included in the incidence position of the reflection light KR, or the measurement result, obtained by the light receiver 47b of the displacement sensor 47. Thus, the measurement result of the displacement sensor 47 is valid when the received light intensity of the displacement sensor 47 is greater than or equal to the first set value and less than or equal to the second set value or less. This allows position adjustment to be performed with higher accuracy.
(1-10) The part of the laser beam LWa reflected by the light combining member 431 enters the monitor 43. The monitor 43 includes a light-receiving element that receives the laser beam LWa. The monitor 43 detects the intensity of the received laser beam LWa. This allows the intensity of the laser beam LW to be monitored.
(1-11) The guide beam source 44 is arranged to emit the guide beam LG toward the emission surface 431b of the light combining member 431. The emission surface 431b of the light combining member 431 reflects the guide beam LG. The guide beam LG is reflected by the light combining member 431 so as to be coaxial with the laser beam LW transmitted through the light combining member 431. The guide beam LG reflected by the light combining member 431 passes through the focus adjuster 45 and is reflected in the scanner 46 in the same manner as the laser beam LW to be emitted to the processing subject W. Thus, the main controller 21 controls the scanner 46 based on the processing data in the same manner as when scanning the laser beam LW. As a result, the main controller 21 projects the processing pattern onto the processing surface Wa of the processing subject W with the guide beam LG. The guide beam LG has a visible spectrum wavelength. Thus, the guide beam LG allows one to check the processing pattern.
(1-12) The detection beam LK is inclined relative to the perpendicular axis 49L of the protective glass 49. Thus, when the processing surface Wa is located closer to the head unit 13 or farther from the head unit 13 than the reference plane BP, the guide point of the detection beam LK is shifted away from the center of the reference mark 60. For example, when the processing surface Wa is located at the farthest position shown in Fig. 10, the guide point 70b shown in Fig. 12 will be projected. Further, for example, when the processing surface Wa is located at the closest position shown in Fig. 11, the guide point 70c shown in Fig. 12 will be projected. The guide points 70a to 70c projected in this manner facilitates determination of whether the processing surface Wa is located at the reference plane BP.
(1-13) The laser processing device 10A includes the focus adjuster 45 that changes the focal length of the laser beam LW. The first distance from the protective glass 49 to the position where the image-capturing axis 48L of the image-capturing unit 48 intersects the perpendicular axis 49L of the protective glass 49 is the distance from the protective glass 49 to a position that is located beyond the focal position adjustment range of the focus adjuster 45 and far from the protective glass 49. By setting the first distance in this manner, the image-capturing axis 48L of the image-capturing unit 48 can be located close to the perpendicular axis 49L of the protective glass 49. Thus, the laser processing device 10A obtains a wide angle of view for the image-capturing unit 48 and acquires a subject image with reduced distortion.

### Second Embodiment

### Outline of Laser Processing Device

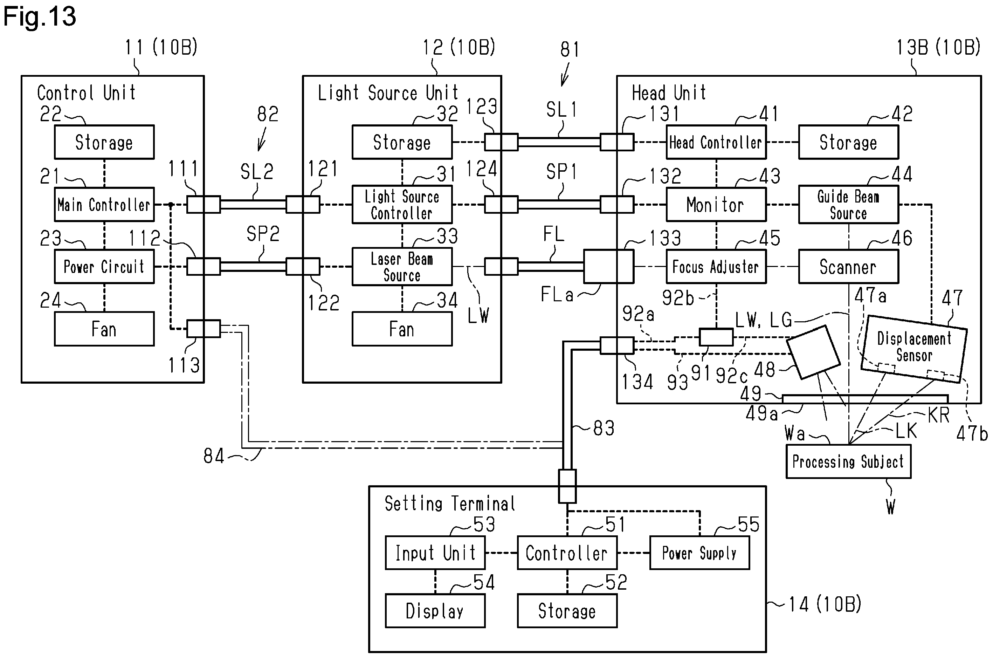

Fig. 13 is a block diagram illustrating the configuration of a laser processing device 10B in accordance with a second embodiment.

The laser processing device 10B includes the control unit 11, the light source unit 12, the head unit 13B, and the setting terminal 14. The laser processing device 10B in accordance with the second embodiment differs from the laser processing device 10A in accordance with the first embodiment in the structure of the head unit 13B. The control unit 11, the light source unit 12, and the setting terminal 14 of the laser processing device 10B in accordance with the second embodiment have the same configuration as those in the laser processing device 10A in accordance with the first embodiment. Further, the connectional relationship of the units 11, 12, and 13B with the setting terminal 14 in the laser processing device 10B in accordance with the first embodiment is the same as the laser processing device 10A in accordance with the first embodiment.

### Head Unit

The head unit 13B includes an image-capturing power supplying unit 91. The image-capturing power supplying unit 91 is connected between the connector 134 and the image-capturing unit 48. The image-capturing unit 48 is connected by a signal line 93 to the connector 134.

The image-capturing power supplying unit 91 is connected by a power line 92a to the connector 134. Further, the image-capturing power supplying unit 91 is connected by a power line 92b to the image-capturing unit 48.

The image-capturing power supplying unit 91 is connected by a power line 92c to the connector 132. Fig. 13 shows the image-capturing power supplying unit 91 connected to the focus adjuster 45. This indicates that the drive voltage of the head unit 13B, which is supplied by the connector 132, is supplied to the image-capturing power supplying unit 91. The drive voltage supplied in such a manner is a voltage allowing for operation of the image-capturing unit 48 (internal drive voltage).

The image-capturing power supplying unit 91 supplies the image-capturing unit 48 with the drive voltage supplied from the connector 134 or the voltage supplied from the connector 132. Thus, the image-capturing unit 48 is actuated by the voltage supplied from one of the connectors 132 and 134.

When supplied with voltage from the connector 134, the image-capturing power supplying unit 91 is configured to supply the voltage to the image-capturing unit 48. When not supplied with voltage from the connector 134, the image-capturing power supplying unit 91 is configured to supply the internal drive voltage to the image-capturing unit 48.

The connector 134 is configured to allow for attachment and detachment of the third electrical cable 83. As described in the first embodiment, the third electrical cable 83 is an image-capturing cable including a power supplying line that supplies drive voltage to the image-capturing unit 48 and a signal line that outputs data of a subject image. The setting terminal 14 is configured to supply the drive voltage to the connector to which the third electrical cable 83 is connected. Thus, the image-capturing power supplying unit 91 supplies the voltage from the connector 134 to the image-capturing unit 48. This actuates the image-capturing unit 48.

A case in which voltage is not supplied to the connector 134 will now be described. For example, an electric cable that includes only a signal line may be connected to the connector 134. Further, the setting terminal 14 may include a connector that does not supply drive voltage, and the third electrical cable 83 may be connected to the connector. In such cases, the connector 134 is not supplied with the drive voltage of the image-capturing unit 48. When the drive voltage is not supplied, the image-capturing power supplying unit 91 supplies the internal drive voltage to the image-capturing unit 48. This ensures that the image-capturing unit 48 is actuated. In this manner, even when the connector 134 is not supplied with voltage, the image-capturing unit 48 can be actuated. This improves the usability of the image-capturing unit 48.

### Advantages

In addition to the advantages of the first embodiment, the first embodiment has the advantages described below.
(2-1) The laser processing device 10B includes the image-capturing power supplying unit 91, which is connected between the image-capturing unit 48 and the connector 134. The image-capturing power supplying unit 91 supplies the image-capturing unit 48 with the drive voltage supplied from the connector 134 or the voltage supplied from the connector 132. Thus, the image-capturing unit 48 is actuated by the voltage supplied from one of the connectors 132 and 134.
(2-2) When supplied with voltage from the connector 134, the image-capturing power supplying unit 91 is configured to supply the voltage to the image-capturing unit 48. When not supplied with voltage from the connector 134, the image-capturing power supplying unit 91 is configured to supply the internal drive voltage to the image-capturing unit 48. In this manner, even when the connector 134 is not supplied with voltage, the image-capturing unit 48 can be actuated. This improves the usability of the image-capturing unit 48.

### Modified Examples

The above embodiments may be modified as described below. The modified examples described below may be combined as long as there is no technical contradiction. In the modified examples described hereafter, same reference characters are given to those components that are the same as the corresponding components of the above embodiments. Such components will not be described in detail.

The laser processing device may be changed in configuration.

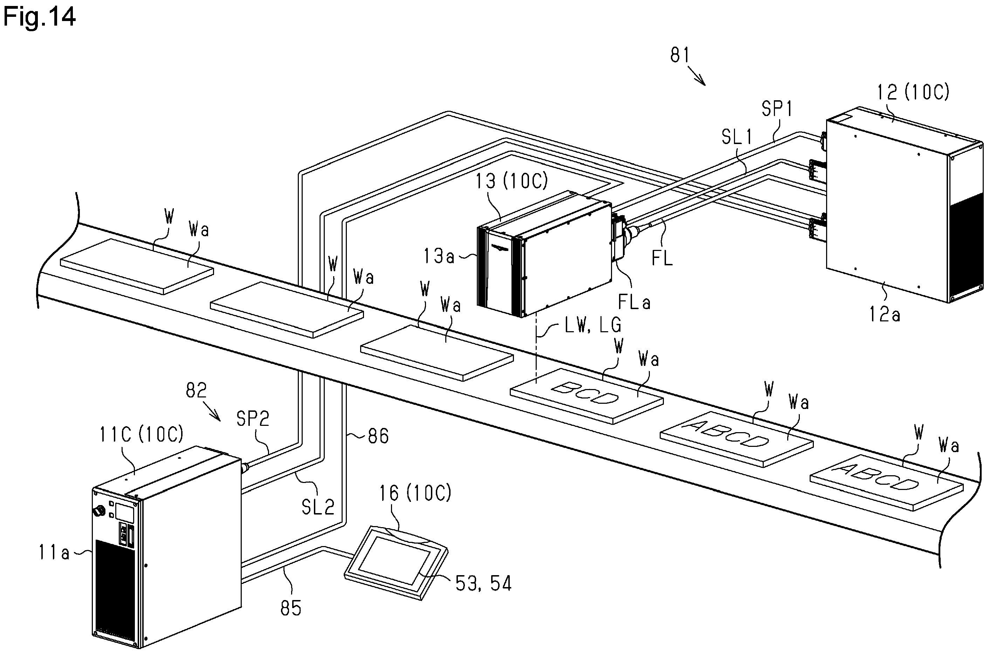

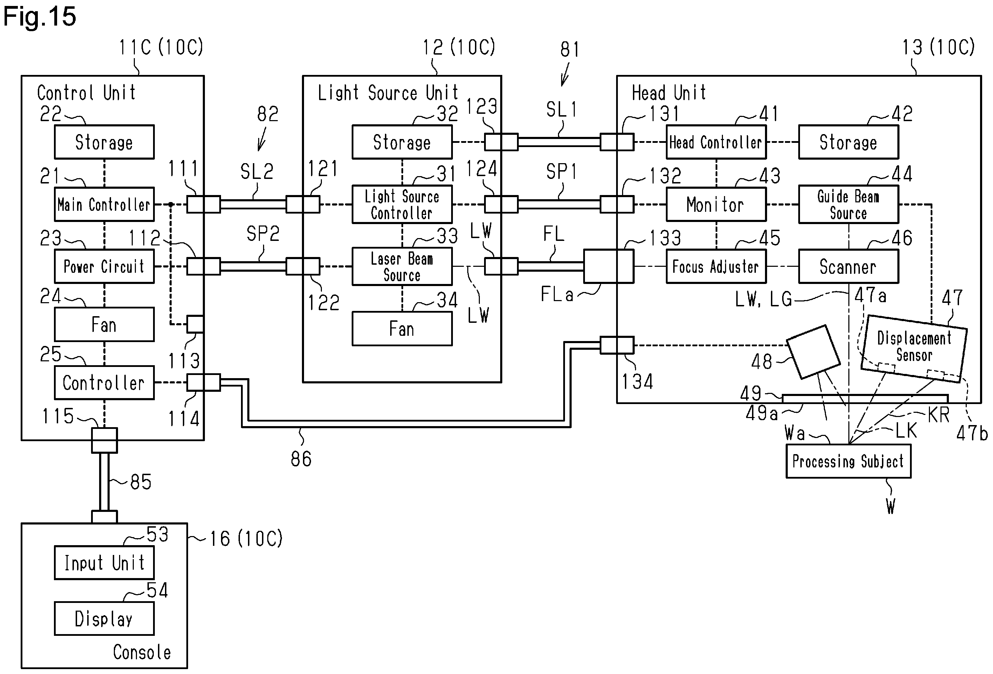

Figs. 14 and 15 show a laser processing device 10C.

The laser processing device 10C includes a control unit 11C, the light source unit 12, the head unit 13, and a console 16. The console 16 is connected by a fifth electrical cable 85 to the control unit 11C. The head unit 13 is connected by a sixth electrical cable 86 to the control unit 11C.

### Control Unit

As shown in Fig. 15, the control unit 11C includes connectors 114 and 115.

The connector 114 is connected to the image-capturing unit 48 of the head unit 13. The connector 114 is configured to allow for attachment and detachment of the sixth electrical cable 86. The sixth electrical cable 86 is connected to the connector 134 of the head unit 13. The sixth electrical cable 86 is an image-capturing cable including a power supplying line that supplies drive voltage to the image-capturing unit 48 and a signal line that outputs data of a subject image.

The connector 115 is connected to the console 16. The connector 115 is configured to allow for attachment and detachment of the fifth electrical cable 85. The fifth electrical cable 85 is a cable including power supplying and signal lines. The power circuit 23 may supply electric power for driving the console 16. The console 16 may be connected to the control unit 11 of the first and second embodiments.

The console 16 includes the input unit 53 and the display 54. The display 54 is configured to show various types of information on the laser processing device 10C. The input unit 53 is configured to allow a user to input data. The console 16 may include, for example, a general-purpose terminal, such as a tablet terminal, a PDA, or a smartphone, and dedicated application software downloaded to the general-purpose terminal.

The console 16 is used to perform various settings on the laser processing device 10C. Further, the console 16 is used to display the state of the laser processing device 10C and various types of information.

In accordance with the operation of the input unit 53, the console 16 instructs controls and operation modes performed by the control unit 11C.

The control unit 11C includes a controller 25. The controller 25 has a functionality for generating and editing the processing data or the like of the laser processing device 10C. The controller 25 shows a window on the display 54 used to perform tasks for generating and editing the processing data or the like. The controller 25 generates processing data for processing the processing subject W based on operation of the input unit 53 by the user. The controller 25 stores the processing data in the storage 22.

Further, the controller 25 has a functionality for showing the data of the subject image acquired by the image-capturing unit 48 of the head unit 13 on the display 54 of the console 16. This allows the user to check the subject image of the image-captured processing subject W on the display 54 of the console 16. Further, the subject image including the processing pattern formed by the guide beam LG may be shown on the display 54. Additionally, the subject image shown on the display 54 may include the reference mark 60 formed by the guide beam LG and the guide point 70 formed by the detection beam LK of the displacement sensor 47.

The number of units in the first and second embodiments may be changed.

For example, a laser processing device may be formed by a single unit, including the elements of the control unit 11 and the elements of the light source unit 12 shown in Fig. 2, and the head unit 13 connected to the single unit. Further, a laser processing device may be formed by a single unit, including the elements of the light source unit 12 and the elements of the head unit 13, and the control unit 11 connected to the single unit. Alternatively, a laser processing device may be formed by a single unit, including the elements of the control unit 11 and some of the elements of the light source unit 12, and another single unit, including the remaining elements of the light source unit 12 and the elements of the head unit 13. The laser processing devices formed in such a manner also have the same advantages as the above embodiment.

In the first and second embodiments, the light projector 47a and the light receiver 47b are integrated in the displacement sensor 47. Instead, a displacement sensor that has the light projector 47a and the light receiver 47b arranged separately may be used.

The displacement sensor 47 may include a filter attached to the light receiver 47b to block the wavelength band of the guide beam LG. In this case, the displacement sensor 47 can measure distance while the guide beam LG projects the reference mark 60.

The first set value and the second set value may be stored in the storage 42 of the head unit 13. The head controller 41 compares the received light intensity at the light receiver 47b of the displacement sensor 47 with the first set value and the second set value to determine whether there is an error. Information of whether there is an error is sent from the head controller 41 to the main controller 21. This allows the state of the received light intensity at the displacement sensor 47 to be shown on the setting terminal 14. The head controller 41 may send information of whether there is an error and the received light intensity to the main controller 21.

A half mirror, a beam splitter, or the like may be used as the light combining member 431.

The above embodiment uses the light combining member 431 that transmits the laser beam LW and reflects the guide beam LG. Instead, a light combining member that reflects the laser beam LW and transmits the guide beam LG may be used.

In the first and second embodiments, the light combining member 431 reflects part of the laser beam LWso that the reflection strikes the monitor 43. Instead, a separate reflection member may be used to reflect part of the laser beam LW so that the reflection strikes the monitor 43.

In the first and second embodiments, the displacement sensor 47 is arranged so that the detection beam LK is transmitted through the protective glass 49, which serves as an emission window. Instead, the displacement sensor 47 may include an emission window separate from the protective glass 49 so that at least one of the detection beam LK and the reflection light KR is transmitted through the emission window.

In the first and second embodiments, the direction may be changed in which the light projector 47a and the light receiver 47b of the displacement sensor 47 are arranged next to each other.

As a first example of such a direction, the displacement sensor 47 may be arranged so that the light projector 47a and the light receiver 47b are arranged next to each other parallel to the plane LP shown in Fig. 4, as viewed from the side of the emission surface 49a of the protective glass 49.

As a second example of such a direction, the displacement sensor 47 may be arranged so that the distance from the perpendicular axis 49L of the protective glass 49 to the light projector 47a is the same as that to the light receiver 47b, as viewed from the side of the emission surface 49a of the protective glass 49. In this case, the displacement sensor 47 may be arranged so that the light projector 47a and the light receiver 47b are arranged next to each other in the circumferential direction of a circle centered about the perpendicular axis 49L. Further, the displacement sensor 47 may be arranged so that the angle between the perpendicular axis 49L and the detection beam LK emitted from the light projector 47a is equal to the angle between the perpendicular axis 49L and the reflection light KR, which is the reflection of the detection beam LK striking the light receiver 47b.

In the first and second embodiments, the head unit 13 may include a converging lens, an fθ lens, or the like.

In the first and second embodiments, the guide beam source 44 may be omitted.

In the first and second embodiments, the focus adjuster 45 may be omitted.

In the first and second embodiments, the displacement sensor 47 may be omitted.

The setting terminal 14 may perform image-processing, such as distortion correction in accordance with the inclination of the image-capturing axis 48L of the image-capturing unit 48, on the data of the subject image acquired from the image-capturing unit 48, and show the processed data on the display 54. Further, the setting terminal 14 may perform image-processing so that the processing data is shown on the display 54 superimposed on the subject image acquired from the image-capturing unit 48 in accordance with the inclination of the image-capturing axis 48L of the image-capturing unit 48.

### Clauses

Technical concepts that can be understood from each of the above embodiments and modified examples will now be described. Reference characters used in the described embodiment are added to corresponding elements in the clauses to aid understanding without any intention to impose limitations to these elements. The reference characters are given as examples to aid understanding and not intended to limit elements to the elements denoted by the reference characters.

### [Clause 1]

A laser processing device that processes a processing subject with a laser beam, the laser processing device including:
a laser beam source that emits the laser beam;
a scanner that directs the laser beam, emitted from the laser beam source, toward the processing subject and performs two-dimensional scanning within a processing region of the processing subject;
an emission window that transmits the laser beam directed toward the processing subject by the scanner;
a housing that accommodates at least the scanner and includes one side surface oriented toward the processing subject, the one side surface including the emission window;
an image-capturing unit accommodated in the housing, the image-capturing unit capturing an image of the processing subject through the emission window to acquire a subject image including at least part of the processing region,
where the image-capturing unit is arranged so that an image-capturing axis for acquiring the subject image intersects a perpendicular axis of the emission window at a predetermined first distance from the emission window.

### [Clause 2]

The laser processing device according to clause 1, further including an image-capturing connector arranged on the housing and configured to allow for attachment and detachment of an image-capturing cable, the image-capturing cable including at least one of a power supplying line that supplies drive voltage to the image-capturing unit and a signal line that outputs data of the subject image.

### [Clause 3]

The laser processing device according to clause 2, where the image-capturing cable includes both the power supplying line and the signal line.

### [Clause 4]

The laser processing device according to any one of clauses 1 to 3, further including:
a control unit including a controller that controls the scanner; and
a light source unit including the laser beam source,
where the housing is a housing of a head unit that includes both the scanner and the image-capturing unit,
the laser processing device further includes:
   a first electrical cable connecting the light source unit and the head unit;
   an optical fiber cable connected to the light source unit to transmit the laser beam to the head unit; and
   a second electrical cable connecting the control unit and the light source unit,
   where the housing includes a connector configured to allow for attachment and detachment of the first electrical cable.

### [Clause 5]

The laser processing device according to clause 4, where the first electrical cable includes a first power cable that supplies drive voltage for the head unit, and a first signal cable that transmits a control signal to the head unit.

### [Clause 6]

The laser processing device according to clause 4 or 5, where the second electrical cable includes a second power cable that supplies drive voltage for the light source unit and drive voltage for the head unit, and a second signal cable that transmits a control signal to the head unit and a control signal to the light source unit.

### [Clause 7]

The laser processing device according to any one of clauses 4 to 6 depending on clause 3, further including an image-capturing power supplying unit connected to the image-capturing connector and the connector, where the image-capturing power supplying unit supplies the image-capturing unit with the drive voltage supplied from the image-capturing connector or voltage supplied from the connector.

### [Clause 8]

The laser processing device according to clause 7, where the image-capturing power supplying unit supplies the image-capturing unit with the drive voltage supplied from the image-capturing connector when voltage is not supplied from the connector and supplies the image-capturing unit with the voltage supplied from the connector when the voltage is supplied from the connector.

### [Clause 9]

The laser processing device according to any one of clauses 1 to 8, further including:
a guide beam source that emits a guide beam having a visible spectrum wavelength; and
a light combining member that combines the laser beam and the guide beam, where
the scanner performs two-dimensional scanning with the laser beam and the guide beam, and
the emission window is configured to allow transmission of the laser beam and the guide beam.

### [Clause 10]

The laser processing device according to clause 9, further including:
a mode selection unit that selects a processing mode for processing the processing subject with the laser beam or a position adjustment mode for adjusting a position of the processing subject; and
a controller that controls the scanner to process the processing subject with the laser beam in the processing mode and controls the scanner to project a position adjustment reference mark onto the processing subject with the guide beam in the position adjustment mode.

### [Clause 11]

The laser processing device according to any one of clauses 1 to 10, further including:
a displacement sensor, where
the displacement sensor includes
a light projector that projects a detection beam having a visible spectrum wavelength onto the processing subject, and
a light receiver that receives light when the processing subject diffusively reflects the detection beam,
where the displacement sensor is arranged so that an optical axis of the detection beam intersects the perpendicular axis at a predetermined reference distance from the emission window, and the displacement sensor measures distance based on a light receiving state of the light receiver.

### [Clause 12]

The laser processing device according to clause 11, where the light projector and the light receiver are arranged next to each other in a direction intersecting an optical axis of the laser beam oriented toward the scanner, as viewed from an emission plane of the emission window from which the laser beam is emitted.

### [Clause 13]

The laser processing device according to clause 11 or 12, where the light receiver and the light projector are arranged at the same side of an optical axis of the laser beam oriented toward the scanner, as viewed from an emission plane of the emission window from which the laser beam is emitted.

### [Clause 14]

The laser processing device according to clause 12 or 13, where the light projector and the light receiver are arranged next to each other in a direction orthogonal to the optical axis of the laser beam oriented toward the scanner.

### [Clause 15]

The laser processing device according to clause 12 or 13, where the light projector and the light receiver are arranged in a circumferential direction of a circle centered about the perpendicular axis.

### [Clause 16]

The laser processing device according to any one of clauses 11 to 15, further including:
a focus adjuster that changes a focal length of the laser beam,
where the reference distance is a reference focal length adjusted by the focus adjuster.

### [Clause 17]

The laser processing device according to clause 16, where the reference focal length is a length that is a middle of a farthest focal length, which is farthest from the emission window, and a closest focal length, which is closest to the emission window, in the focal length that is adjustable by the focus adjuster.

### [Clause 18]

The laser processing device according to any one of clauses 1 to 17, further including:
a focus adjuster that changes a focal length of the laser beam,
the first distance is a distance from the emission window to a position that is located beyond a focal position adjustment range of the focus adjuster and far from the emission window.

### Exemplary descriptions are given above. In addition to the elements and methods (manufacturing processes) described to illustrate the technology of this disclosure, a person skilled in the art would recognize the potential for a wide variety of combinations and substitutions. The present disclosure encompasses all substitutions, modifications, and variations within the scope of the disclosure including the scope of the claims.

### REFERENCE SIGNS LIST

10A-10C) laser processing device
11, 11C) control unit
11a) housing
111-115) connector
12) light source unit
12a) housing
121-124) connector
13, 13B) head unit
13a) housing
131, 132) connector
133) connector
134) connector (image-capturing connector)
14) setting terminal
16) console
21) main controller
22) storage
23) power circuit
24) fan
25) controller
31) light source controller
32) storage
33) laser beam source
34) fan
41) head controller
42) storage
43) monitor
431) light combining member
431a) incidence surface
431b) emission surface
44) guide beam source
45) focus adjuster
45a-45c) lens
46) scanner
46a, 46b) mirror
46c, 46d) driver
46e) support
47) displacement sensor
47a) light projector
47b) light receiver
48) image-capturing unit
48L) image-capturing axis
49) protective glass
49a) emission surface
49L) perpendicular axis
51) controller
52) storage
53) input unit
54) display
55) power supply
60) reference mark
61) circle
61a) center point
62a, 62b) straight line
70, 70a-70c) guide point
81) first electrical cable
82) second electrical cable
83) third electrical cable
84) image-capturing cable
85) communication cable
86) control cable
87) communication cable
91) image-capturing power supplying unit
92a-92c) power line
93) signal line
BP) reference plane
FL) optical fiber cable
FLa) head connector
FP) farthest focal plane
KR) reflection light
LG) guide beam
LK) detection beam
LP) plane
Lw) Laser beam
LWa) laser beam
NP) closest focal plane
SL1) first signal cable
SL2) second signal cable
SP1) first power cable
SP2) second power cable
W) processing subject
Wa) processing surface

## Claims

1. A laser processing device that processes a processing subject with a laser beam, the laser processing device comprising:
a laser beam source that emits the laser beam;
a scanner that directs the laser beam, emitted from the laser beam source, toward the processing subject and performs two-dimensional scanning within a processing region of the processing subject;
an emission window that transmits the laser beam directed to the processing subject by the scanner;
a housing that accommodates at least the scanner and includes one side surface oriented toward the processing subject, the one side surface including the emission window; an image-capturing unit accommodated in the housing, the image-capturing unit capturing an image of the processing subject through the emission window to acquire a subject image including at least part of the processing region,
wherein the image-capturing unit is arranged so that an image-capturing axis for acquiring the subject image intersects a perpendicular axis of the emission window at a predetermined first distance from the emission window.

2. The laser processing device according to claim 1, further comprising an image-capturing connector arranged on the housing and configured to allow for attachment and detachment of an image-capturing cable, the image-capturing cable including at least one of a power supplying line that supplies drive voltage to the image-capturing unit and a signal line that outputs data of the subject image.

3. The laser processing device according to claim 2, wherein the image-capturing cable includes both the power supplying line and the signal line.

4. The laser processing device according to claim 3, further comprising:
a control unit including a controller that controls the scanner; and
a light source unit including the laser beam source,
wherein the housing is a housing of a head unit that includes both the scanner and the image-capturing unit,
the laser processing device further comprises:
a first electrical cable connecting the light source unit and the head unit;
an optical fiber cable connected to the light source unit to transmit the laser beam to the head unit; and
a second electrical cable connecting the control unit and the light source unit,
wherein the housing includes a connector configured to allow for attachment and detachment of the first electrical cable.

5. The laser processing device according to claim 4, wherein the first electrical cable includes a first power cable that supplies drive voltage for the head unit, and a first signal cable that transmits a control signal to the head unit.

6. The laser processing device according to claim 4 or 5, wherein the second electrical cable includes a second power cable that supplies drive voltage for the light source unit and drive voltage for the head unit, and a second signal cable that transmits a control signal to the head unit and a control signal to the light source unit.

7. The laser processing device according to any one of claims 4 to 6, further comprising an image-capturing power supplying unit connected to the image-capturing connector and the connector, wherein the image-capturing power supplying unit supplies the image-capturing unit with the drive voltage supplied from the image-capturing connector or voltage supplied from the connector.

8. The laser processing device according to claim 7, wherein the image-capturing power supplying unit supplies the image-capturing unit with the drive voltage supplied from the image-capturing connector when voltage is not supplied from the connector and supplies the image-capturing unit with the voltage supplied from the connector when the voltage is supplied from the connector.

9. The laser processing device according to any one of claims 1 to 8, further comprising:
a guide beam source that emits a guide beam having a visible spectrum wavelength; and
a light combining member that combines the laser beam and the guide beam, where the scanner performs two-dimensional scanning with the laser beam and the guide beam, and
the emission window is configured to allow transmission of the laser beam and the guide beam.

10. The laser processing device according to any one of claims 1 to 9, further comprising:
a displacement sensor, wherein the displacement sensor includes
a light projector that projects a detection beam having a visible spectrum wavelength onto the processing subject; and
a light receiver that receives light when the processing subject diffusively reflects the detection beam,
wherein the displacement sensor is arranged so that an optical axis of the detection beam intersects the perpendicular axis at a predetermined reference distance from the emission window, and the displacement sensor measures distance based on a light receiving state of the light receiver.

11. The laser processing device according to any one of claims 1 to 10, further comprising:
a focus adjuster that changes a focal length of the laser beam,
wherein the first distance is a distance from the emission window to a position that is located beyond a focal position adjustment range of the focus adjuster and far from the emission window.
